# FASCICULE DE BREVET EUROPEEN

(11) **EP 3 601 016 B1**
(45) Date de publication et mention de la délivrance du brevet: **31.03.2021**
(21) Numéro de dépôt: 18709672.2
(22) Date de dépôt: 20.02.2018
(51) Int. Cl.: B62D 25/16, B60R 13/04, B62D 65/16, B62D 27/06

(54) **PIECE D'HABILLAGE DE CARROSSERIE DE VEHICULE**
VERKLEIDUNGSTEIL FÜR FAHRZEUGKAROSSERIE
VEHICLE BODY TRIM PART

(30) Priorité: 24.03.2017 FR 1752468
(43) Date de publication de la demande: 05.02.2020
(73) Titulaire: PSA Automobiles SA, 78300 Poissy (FR)
(72) Inventeur: BAILLON, Franck, 70400 Echenans Sous Mont Vaudois (FR); IBRAHIM, David, 70250 Ronchamp (FR)
(86) Numéro de dépôt international: PCT/FR2018/050389
(87) Numéro de publication internationale: WO 2018/172642

(56) Documents cités:
- EP-A1- 2 423 080
- FR-A1- 2 983 443
- JP-A- 2000 103 364

## Description

L'invention se rapporte à un dispositif d'habillage de carrosserie de véhicule, tel que par exemple un enjoliveur d'aile de véhicule automobile. L'invention concerne également les véhicules comprenant de tels dispositifs d'habillage de carrosserie.

Les dispositifs d'habillage de véhicule sont souvent fixés par clippage sur la carrosserie. Il a été constaté que lorsque ces derniers subissent des petits chocs, certains clips de fixation montrent une tenue à l'effort insuffisante et se décrochent. A terme, il y a un risque de perte de l'élément d'habillage. Une solution consistant à renforcer la tenue à l'effort de ces clips de fixation est peu envisageable car elle impliquerait des efforts de montage et de démontage trop importants. Une solution impliquant une fixation par des moyens non réversibles tels que des vis, nuirait à l'aspect esthétique et à la qualité perçue par l'utilisateur du véhicule. Par ailleurs une telle solution impliquerait l'ajout d'une opération supplémentaire en ligne de montage qui viendrait en complément de l'opération de clippage, avec les contraintes qu'une telle opération implique telles que l'accessibilité à la vis etc.

Des solutions pour renforcer la fixation de tels éléments d'habillage de carrosserie ont déjà été proposées. Par exemple Le document FR2985965 décrit un dispositif d'habillage de véhicule comprenant un dispositif de fixation se refermant sur l'aile du véhicule en le pinçant. L'opération de pincement intervient en complément de la fixation par clippage. Cette solution implique donc la mise en œuvre d'un dispositif d'habillage complexe dans sa conception comme dans son montage.

Le document EP2423080 décrit une structure de passage de roue comprenant une partie inférieure horizontale destinée à s'étendre sous le véhicule et montrant une griffe d'engagement destinée à coopérer avec un orifice dans la partie inférieure du véhicule. Une fois la griffe engagée, la pièce d'habillage est pivotée autour de la liaison formée par la griffe et un élément de carrosserie jusqu'à être positionnée en regard dudit élément de carrosserie en vue de sa fixation. Cette solution ne s'adresse pas directement à la problématique posée. Par ailleurs, sa mise en oeuvre implique un accès au bas de caisse du véhicule, ce qui n'est pas toujours possible, le style pouvant impliquer des pièces d'habillage ne couvrant que partiellement le tour de roue.

Il existe donc un besoin de solutions simples et économiques permettant d'améliorer la tenue à l'effort des dispositifs d'habillage et qui soient adaptables à tous les styles de véhicules.

A cet effet l'invention a pour objet une pièce d'habillage destinée à être fixée sur un ou plusieurs éléments de carrosserie, ladite pièce comprenant un corps duquel s'étendent une pluralité de moyens de fixation élastiques destinés à être reçus dans des ajours correspondants sur le ou les éléments de carrosserie, la pièce étant remarquable en ce qu'elle comprend en outre au moins un moyen de fixation rigide sous forme d'un crochet comprenant un pied s'étendant depuis le corps de ladite pièce d'habillage et un doigt de verrouillage et définissant avec ledit corps un entrefer.

Selon l'invention, ledit ou lesdits moyens de fixation rigides (ou crochets) sont destinés à être reçus dans des ajours correspondants sur le ou les éléments de carrosserie.

Selon des modes particuliers de réalisation la pièce d'habillage peut présenter l'une ou l'autre des caractéristiques suivantes :
- Le pied du crochet comprend un moyen d'emboitage élastique destiné à coopérer avec l'élément de carrosserie, de préférence un clip.
- Le moyen d'emboitage élastique se déploie perpendiculairement au doigt de verrouillage.
- Le moyen d'emboîtage élastique est venu de matière avec le pied du crochet.
- Le pied comprend au moins une nervure de renfort et de positionnement, de préférence la ou lesdites nervures s'étendent perpendiculairement au doigt de verrouillage.
- Au moins un crochet est disposé en partie inférieure du corps de ladite pièce d'habillage.

Comme on l'aura compris à la lecture de la définition qui vient d'en être donnée l'invention consiste à doter une pièce d'habillage de moyens de fixation rigides de type « crochet » permettant par une reprise d'effort d'éviter que les moyens de fixation réversibles (c.-à-d. élastiques) ne se détachent. Selon une mise en oeuvre préférée de l'invention, les moyens de fixation rigides sont associés à des moyens de fixation élastiques et combinent donc la double fonction de fixation et de reprise d'effort. Une fois montée, la pièce d'habillage devient indémontable en dehors de l'intervention d'un opérateur ce qui minimise les risques de perte de cette pièce. Le système de fixation rigide est simple à mettre en oeuvre. L'invention est également remarquable en ce que l'association de moyens élastiques aux moyens rigides formés par le crochet peut permettre d'absorber un jeu éventuel entre l'écartement présenté par l'entrefer et l'épaisseur de l'élément de carrosserie reçu dans ledit entrefer.

Selon un second aspect l'invention a pour objet un véhicule comprenant au moins un élément de carrosserie sur lequel est fixée une pièce d'habillage telle que définie plus haut, le véhicule étant remarquable en ce que ledit ou au moins un desdits éléments de carrosserie comprend au moins un ajour destiné à recevoir un crochet porté par ladite pièce d'habillage, ledit ajour étant dimensionné pour présenter une longueur au moins égale à la longueur dudit crochet.

Selon un mode de réalisation préféré de l'invention, le crochet présentant au niveau de son pied au moins une nervure s'étendant perpendiculairement au doigt de verrouillage et définissant la largeur du crochet, le véhicule est remarquable en ce que l'ajour présente une forme trapézoïdale dimensionnée pour que la base la plus large du trapèze présente une largeur supérieure à la largeur présentée par le crochet.

De préférence, au moins un élément de carrosserie est une aile à passage de roue. De préférence encore au moins un élément de carrosserie est une jupe de pare-chocs. Avantageusement, au moins un ajour destiné à recevoir un crochet est formé dans ladite jupe de pare-chocs.

La forme trapézoïdale de l'ajour destiné à recevoir le crochet permet de simplifier l'opération d'engagement de ce dernier en offrant une ouverture plus large que nécessaire. Cette configuration est particulièrement intéressante lorsque le crochet présente en outre un moyen d'emboîtage élastique se déployant dans une direction différente de celle du doigt de verrouillage du crochet puisque cela permet de réduire les efforts de montage, le clip ayant à se déplacer selon une course moins importante pour être engagé avec un des bords de l'ajour.

Enfin, l'invention a pour objet un procédé de montage d'une pièce d'habillage telle que définie plus haut sur au moins un élément de carrosserie d'un véhicule tel que défini ci-dessus, le procédé étant remarquable en ce qu'il comprend les étapes suivantes :
a. insertion du ou des crochets présentés par la pièce d'habillage dans les ajours correspondants du ou des éléments de carrosserie selon une direction de pénétration sensiblement perpendiculaire à la surface du ou des éléments de carrosserie ; et
b. translation de la dite pièce d'habillage le long dudit ou desdits éléments de carrosserie de manière à ce que les bords du ou des ajours pénètrent dans l'entrefer du ou des crochets.

De préférence, la translation de la dite pièce d'habillage le long dudit ou desdits éléments de carrosserie à l'étape b) se fait verticalement.
De préférence encore, le procédé comprend en outre une étape c) de fixation de la pièce d'habillage sur le ou lesdits éléments de carrosserie par insertion de moyens de fixation élastiques répartis sur le corps de ladite pièce d'habillage dans des ajours disposés en regards sur le ou les éléments de carrosserie.

L'invention sera bien comprise et d'autres aspects et avantages apparaîtront clairement à la vue de la description qui suit donnée à titre d'exemple en référence aux planches de dessins annexées sur lesquelles :
- La figure 1 montre un exemple de pièce d'habillage selon l'invention telle que montée sur un élément de carrosserie.
- La figure 2 illustre un exemple de réalisation d'un moyen de fixation rigide selon l'invention.
- Les figures 3 et 4 sont deux vues d'un moyen de fixation rigide selon l'invention en position de fixation dans l'ajour correspondant de l'élément de carrosserie.

Dans la description qui suit, le terme « comprendre » est synonyme de « inclure » et n'est pas limitatif en ce qu'il autorise la présence d'autres éléments dans la pièce d'habillage, le véhicule ou le procédé auquel il se rapporte. Il est entendu que le terme « comprendre » inclut les termes «consister en ». Les termes « inférieur », « supérieur », « avant », « arrière », « longitudinal » et « transversal » s'entendront par rapport à l'orientation générale du véhicule. « Inférieur » désignera une proximité au sol plus importante que « supérieur » selon l'axe vertical. Sur les différentes figures, les mêmes références désignent des éléments identiques ou similaires.

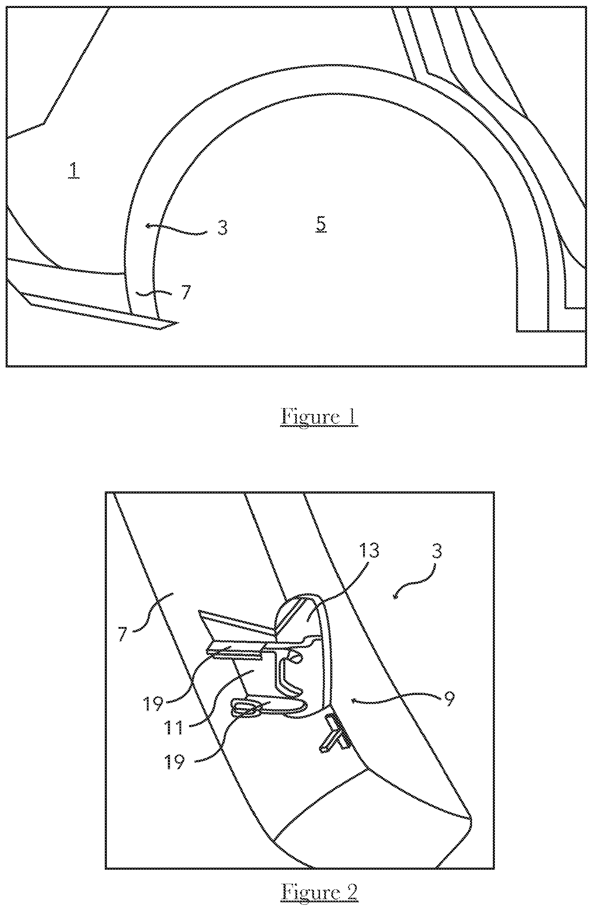

On se réfèrera en premier lieu à la figure 1 montrant un élément de carrosserie 1 de véhicule sur lequel est montée une pièce d'habillage 3. Dans le mode de réalisation de l'invention représenté, l'élément de carrosserie 1 est une aile à passage de roue 5 et la pièce d'habillage 3 est un enjoliveur d'aile. Ce type de pièce d'habillage permet de protéger le bord de l'aile délimitant le passage de roue 5, et permet en outre d'ajouter au style du véhicule et à son caractère esthétique. La pièce d'habillage 3 est fixée au moins en partie le long du bord arqué montré par l'aile autour du passage de roue 5 et le cas échéant en partie sur la jupe de pare-choc.

La pièce d'habillage 3 présente un corps 7 destiné à venir se plaquer contre le ou les éléments de carrosserie 1. La pièce d'habillage 3 présente donc une face externe et une face interne, la face interne étant destinée à se placer en regard de l'élément de carrosserie. De manière connue une pluralité de moyens de fixation élastiques s'étend depuis la face interne de la pièce d'habillage 3. Ces moyens de fixation élastiques se présentent préférentiellement sous forme de clips formant des attaches réversibles se fichant dans des ajours correspondants montrés par le ou les éléments de carrosserie 1 disposés en regard.

L'invention est remarquable en ce que la pièce d'habillage comprend en outre au moins un moyen de fixation rigide sous forme d'un crochet. Selon une mise en oeuvre préférée de l'invention, la pièce d'habillage 3 ne présente qu'un seul crochet ou moyen de fixation rigide. Lorsque la pièce présente une pluralité de crochets ceux-ci sont avantageusement orientés selon la même direction. Le ou les crochets sont des éléments d'attache qui viennent en complément des moyens de fixation élastiques de la pièce d'habillage 3.

On se référera à présent à la figure 2 montrant un mode de réalisation préféré de l'invention. Le crochet 9 se présente sous forme d'une tige recourbée ou en équerre comprenant un pied 11 s'étendant depuis la face interne du corps 7 de la pièce d'habillage 3 et un doigt de verrouillage 13 définissant avec ledit corps 7 un entrefer. Le doigt de verrouillage 13 s'étend parallèlement au corps 7 de la pièce d'habillage 3 et est porté par le pied 11. L'écartement présenté par cet entrefer, à savoir l'écartement présenté par le doigt de verrouillage 13 et le corps 7 de la pièce d'habillage 3, est choisi par l'homme du métier comme étant supérieur ou égal à l'épaisseur présentée par l'élément de carrosserie 1 sur lequel la pièce d'habillage 3 est destinée à s'accrocher.

La fixation proprement dite de la pièce d'habillage 3 sur l'élément de carrosserie est effectuée par des moyens de fixation élastiques (non représentés) répartis sur le corps de la pièce d'habillage 3. Cette fixation se fait sans vis, par clippage sur ledit élément de carrosserie. Le ou les crochets 9 présentent une fonction de reprise d'effort, c'est pourquoi ils sont rigides. En effet, le doigt de verrouillage va se plaquer contre l'élément de carrosserie et va donc maintenir en position la pièce d'habillage contre ledit élément de carrosserie. Ce maintien par un élément de fixation rigide limite voire empêche le risque de déclippage des moyens de fixation élastiques. Ainsi, de préférence au moins un crochet 9 est positionné en partie inférieure de la pièce d'habillage 3, avantageusement sur partie du corps 7 destinée à être disposée sensiblement verticalement.

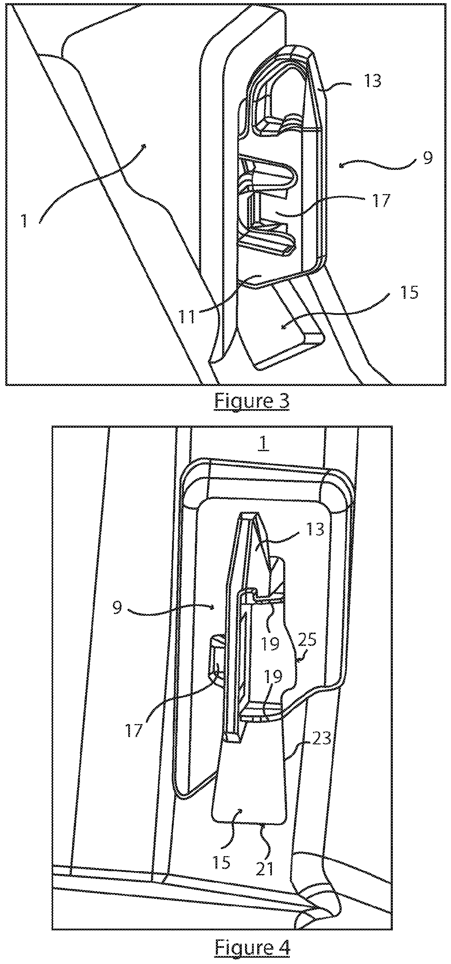

Les figures 3 et 4 sont des vues montrant, depuis l'élément de carrosserie, la fixation de la pièce d'habillage selon l'invention.

Le montage de la pièce d'habillage sur l'élément de carrosserie 1 s'effectue comme suit : le ou les crochets 9 sont placés en regards d'ajours 15 présentés par l'élément de carrosserie, et insérés dans ces ajours 15 selon une direction de pénétration sensiblement perpendiculaire à la surface de l'élément de carrosserie 1. Lorsque le corps de la pièce d'habillage se place en appui contre l'élément de carrosserie 1, le monteur pousse ladite pièce d'habillage le long dudit élément de carrosserie 1 selon un mouvement de translation, de manière à ce que les bords du ou des ajours 15 pénètrent dans l'entrefer du ou des crochets 9. Le mouvement de translation est achevé par exemple lorsque le pied 11 du crochet 9 est placé en butée contre un des bords de l'ajour au niveau de l'entrefer du crochet 9. Ce mouvement de translation peut se faire selon une direction verticale ou horizontale selon l'orientation des crochets 9. Lorsque la pièce d'habillage est un enjoliveur extérieur d'aile, l'homme du métier aura avantage à choisir une orientation des crochets adaptée à un mouvement de translation vertical pour des raisons d'encombrement au niveau des passages de roues. Lorsqu'il se fait verticalement il sera préférentiellement dirigé vers le haut de manière à ne pas gêner le positionnement de parties de la pièce d'habillage destinées à se venir se placer sous l'élément de carrosserie le cas échéant.

Ce mouvement de translation va positionner les éléments de fixation élastiques répartis sur le corps de la pièce en regard d'ajours supplémentaires montrés par l'élément de carrosserie. Le monteur va alors fixer la pièce d'habillage sur l'élément de carrosserie par clippage. Ce montage est rendu possible soit par une souplesse relative montrée par le corps de la pièce, soit par la définition d'un entrefer suffisamment important au niveau des crochets.

Selon un mode réalisation préféré de l'invention, le ou les crochets 9 comprennent en outre un moyen d'emboitage élastique 17, de préférence un clip de fixation. Avantageusement, ce clip de fixation 17 est disposé sur le pied 11 du crochet 9. Lorsque le crochet 9 est inséré dans l'ajour 15 de l'élément de carrosserie destiné à le recevoir, ledit moyen d'emboitage élastique 17 va se déployer pour venir coopérer avec un des bords de l'ajour 15, préfixant la pièce d'emboitage avant même que le monteur n'ait effectué le mouvement de translation insérant un autre bord de l'ajour dans l'entrefer de crochet 9.

Avantageusement, le crochet 9 est destiné à recevoir le bord de l'ajour 15 d'un élément de carrosserie dans son entrefer suite à un mouvement de translation de la pièce 3 le long dudit élément de carrosserie 1, et le moyen d'emboitage élastique 17 est configuré pour se déployer dans une direction différente de celle du mouvement de translation coopérant ainsi avec un autre bord de l'ajour 15 de l'élément de carrosserie 1. Ainsi, de préférence, le doigt de verrouillage 13 s'étend selon une direction différente de la direction de déploiement du moyen d'emboitage élastique 17. De préférence, le moyen d'emboitage élastique 17 se déploie perpendiculairement au doigt de verrouillage 13.

Dans un mode de réalisation préféré de l'invention, le moyen d'emboitage élastique 17 est venu de matière avec le pied 11 du crochet 9. Le crochet 9 présente donc à la fois un moyen de fixation rigide formé par le doigt de verrouillage 13 et un moyen de fixation élastique 17. Les deux sont avantageusement moulés d'une seule pièce.

Avantageusement, le pied 11 présente en outre au moins une nervure 19 de renfort et de positionnement s'étendant perpendiculairement au doigt de verrouillage 13. Lorsque le pied 11 présente un moyen d'emboitage élastique 17 sur un de ses côtés, la ou les nervures 19 s'étendent depuis l'autre côté du pied 11 parallèlement à la direction de déploiement du moyen d'emboitage élastique 17. Ces nervures 19 permettent de renforcer l'embase du crochet 9 et de fixer sa position dans l'ajour 15. De préférence, le doigt de verrouillage 13 s'étend verticalement et les nervures 19 s'étendent longitudinalement par rapport au véhicule. Ainsi la largeur présentée par le crochet 9 est la largeur présentée par l'association de la base du pied 11 et desdites nervures 19.

Dans une mise en œuvre préférée de l'invention au moins un élément de carrosserie 1 du véhicule comprend au moins un ajour 15 destiné à recevoir un crochet 9 porté par la pièce d'habillage 3. Selon l'invention, ledit ajour 15 est dimensionné pour présenter une longueur au moins égale à la longueur dudit crochet 9. De la sorte, il est possible de faire passer le crochet 9 au travers de l'ajour 15 sans avoir à incliner la pièce d'habillage 9.

Lorsque le pied 11 du crochet présente des nervures 19 s'étendant perpendiculairement au doigt de verrouillage 13 et définissant la largeur du moyen de fixation, l'ajour 15 présente préférentiellement une forme trapézoïdale dimensionnée pour que la base 21 la plus large du trapèze présente une largeur supérieure à la largeur présentée par le moyen de fixation. De la sorte, il est possible de minimiser les efforts de montage de la pièce d'habillage 3 puisque le moyen d'emboitage élastique 17 sera moins ou non sollicité lors de l'insertion du crochet 9 dans l'ajour 15. La mise en place de la pièce d'habillage par translation va permettre un positionnement du crochet 9 en partie haute de l'ajour 15 et plaquer le coté du pied 11 du crochet présentant le moyen élastique 17 contre le bord de l'ajour 15 par guidage des nervures le long de la rampe formée par le bord 23 de l'ajour au niveau du côté opposé.

Lors que le crochet 9 présente deux nervures 19 de renfort et de positionnement le bord de l'ajour 15 présentera avantageusement un retrait 25 permettant de former deux rampes de guidage lors de la translation du crochet 9 dans l'ajour, chaque rampe de guidage coopérant avec l'extrémité d'une des nervures19.

De manière avantageuse l'élément de carrosserie montrant un tel ajour est une jupe de pare-choc.

## Revendications

1. Pièce d'habillage (3) destinée à être fixée sur un ou plusieurs éléments de carrosserie (1), ladite pièce (3) comprenant un corps (7) duquel s'étendent une pluralité de moyens de fixation élastiques destinés à être reçus dans des ajours correspondants sur le ou les éléments de carrosserie (1), la pièce (3) étant **caractérisée en ce qu'**elle comprend en outre au moins un moyen de fixation rigide sous forme d'un crochet (9) comprenant un pied (11) s'étendant depuis le corps (7) de ladite pièce d'habillage (3) et un doigt de verrouillage (13) et définissant avec ledit corps (7) un entrefer, le pied (11) du crochet (9) comprenant un moyen d'emboitage élastique (17) destiné à coopérer avec l'élément de carrosserie (1), de préférence un clip.

2. Pièce d'habillage (3) selon la revendication 1 **caractérisée en ce que** le moyen d'emboitage élastique (17) se déploie perpendiculairement au doigt de verrouillage (13).

3. Pièce d'habillage (3) selon l'une des revendications 1 ou 2 **caractérisée en ce que** le moyen d'emboîtage élastique (17) est venu de matière avec le pied (11) du crochet (9).

4. Pièce d'habillage (3) selon l'une des revendications 1 à 3 **caractérisée en ce que** le pied (11) comprend au moins une nervure (19) de renfort et de positionnement, de préférence lesdites nervures (19) s'étendent perpendiculairement au doigt de verrouillage (13).

5. Pièce d'habillage (3) selon une des revendications 1 à 4 **caractérisée en ce qu'**au moins un crochet (9) est disposé en partie inférieure du corps (7) de ladite pièce d'habillage (3).

6. Véhicule comprenant au moins un élément de carrosserie (1) sur lequel est fixée une pièce d'habillage (3) selon l'une des revendications 1 à 5, **caractérisé en ce que** ledit ou au moins un desdits éléments de carrosserie (1) comprend au moins un ajour (15) destiné à recevoir un crochet (9) porté par ladite pièce d'habillage (3), ledit ajour (15) étant dimensionné pour présenter une longueur au moins égale à la longueur dudit crochet (9).

7. Véhicule selon la revendication 6, le crochet (9) présentant au niveau de son pied (11) au moins une nervure (19) s'étendant perpendiculairement au doigt de verrouillage (13) et définissant la largeur du crochet (9), le véhicule est **caractérisé en ce que** l'ajour (15) présente une forme trapézoïdale dimensionnée pour que la base (21) la plus large du trapèze présente une largeur supérieure à la largeur présentée par le crochet (9).

8. Procédé de montage d'une pièce d'habillage (3) selon l'une des revendications 1 à 5 sur au moins un élément de carrosserie d'un véhicule selon l'une des revendications 6 ou 7 **caractérisé en ce qu'**il comprend les étapes suivantes :
a. insertion du ou des crochets (9) présentés par la pièce d'habillage (3) dans les ajours (15) correspondants du ou des éléments de carrosserie (1) selon une direction de pénétration sensiblement perpendiculaire à la surface du ou des éléments de carrosserie (1) ; et
b. translation de la dite pièce d'habillage (3) le long dudit ou desdits éléments de carrosserie (1) de manière à ce que les bords du ou des ajours (15) pénètrent dans l'entrefer du ou des crochets (9).

9. Procédé de montage selon la revendication 8 **caractérisé en ce que** la translation de la dite pièce d'habillage (3) le long dudit ou desdits éléments de carrosserie (1) à l'étape b) se fait verticalement et/ou **en ce qu'**il comprend en outre une étape c) de fixation de la pièce d'habillage (3) sur le ou lesdits éléments de carrosserie (1) par insertion de moyens de fixation élastiques répartis sur le corps de ladite pièce d'habillage (3) dans des ajours disposés en regards sur le ou les éléments de carrosserie (1).

## Patentansprüche

1. Verkleidungsteil (3) zur Befestigung an einem oder mehreren Karosserieteilen (1), wobei das Teil (3) einen Körper (7) aufweist, von dem sich eine Vielzahl von elastischen Befestigungsmitteln zur Aufnahme in entsprechenden Durchbrüchen an dem oder den Karosserieteilen (1) erstrecken, wobei das Teil (3) ferner mindestens ein starres Befestigungsmittel in Form eines Hakens (9) mit einem Fuß aufweist (11), die sich vom Körper (7) des Verkleidungsteils (3) und einem Verriegelungsfinger (13) erstrecken und mit dem Körper (7) einen Luftspalt definieren, wobei der Fuß (11) des Hakens (9) ein elastisches Einsteckmittel (17) zum Zusammenwirken mit dem Karosserieteil (1), vorzugsweise einen Clip, aufweist.

2. Verkleidungsteil (3) nach Anspruch 1, **dadurch gekennzeichnet, dass** sich das elastische Einsteckmittel (17) senkrecht zum Verriegelungsfinger (13) erstreckt.

3. Verkleidungsteil (3) nach einem der Ansprüche 1 oder 2, **dadurch gekennzeichnet, dass** das elastische Einsteckmittel (17) mit dem Fuß (11) des Hakens (9) aus Material hergestellt ist.

4. Verkleidungsteil (3) nach einem der Ansprüche 1 bis 3, **dadurch gekennzeichnet, dass** der Fuß (11) mindestens eine Versteifungs- und Positionierrippe (19) aufweist, vorzugsweise die Rippen (19) sich senkrecht zum Verriegelungsfinger (13) erstrecken.

5. Verkleidungsteil (3) nach einem der Ansprüche 1 bis 4, **dadurch gekennzeichnet, dass** mindestens ein Haken (9) am unteren Teil des Körpers (7) des Verkleidungsteils (3) angeordnet ist.

6. Fahrzeug mit mindestens einem Karosserieteil (1), an dem ein Verkleidungsteil (3) befestigt ist, nach einem der Ansprüche 1 bis 5, **dadurch gekennzeichnet, dass** das mindestens eine Karosserieteil (1) mindestens eine Durchbrechung (15) zur Aufnahme eines Hakens (9) aufweist, der von dem Verkleidungsteil (3) getragen wird, wobei die Durchbrechung (15) so bemessen ist, dass sie mindestens eine Länge aufweist an der Länge des Hakens (9).

7. Fahrzeug nach Anspruch 6, wobei der Haken (9) an seinem Fuß (11) mindestens eine senkrecht zum Verriegelungsfinger (13) verlaufende und die Breite des Hakens (9) definierende Rippe (19) aufweist, **dadurch gekennzeichnet, dass** die Durchbrechung (15) eine trapezförmige Form aufweist, die so bemessen ist, dass die breiteste Basis (21) des Trapezes eine Breite aufweist größer als die vom Haken (9) dargestellte Breite.

8. Verfahren zur Montage eines Verkleidungsteils (3) nach einem der Ansprüche 1 bis 5 auf mindestens ein Karosserieelement eines Fahrzeugs nach einem der Ansprüche 6 oder 7, **dadurch gekennzeichnet, dass** es die folgenden Schritte umfasst:
a) Einsetzen des/der von dem Verkleidungsteil (3) in den entsprechenden Durchbrüchen (15) des/der Karosserieteile (1) vorgelegten Haken(s) (9) in einer Eindringrichtung im Wesentlichen senkrecht zur Oberfläche des/der Karosserieteile (1); und
b) Verschiebung des Verkleidungsteils (3) entlang des mindestens einen Karosserieteils (1), sodass die Ränder der Durchbrechung (15) in den Luftspalt des oder der Haken (9) eintreten.

9. Montageverfahren nach Anspruch 8, **dadurch gekennzeichnet, dass** die Translation des Verkleidungsteils (3) entlang des mindestens einen Karosserieteils (1) in Schritt b) vertikal erfolgt und/oder dass es ferner einen Schritt c) zur Befestigung des Verkleidungsteils (3) an dem mindestens einen Karosserieteil (1) durch Einsetzen elastischer Befestigungsmittel umfasst, die über den Körper des Verkleidungsteils verteilt sind (3) in nach unten weisenden Tagen auf das oder die Karosserieteile (1).

## Claims

1. Coating part (3) intended to be attached to one or more bodywork parts (1), that part (3) comprising a body (7) of which a plurality of elastic fastening means is extended to be received in corresponding days on the bodywork part(s) (1), that part (3) being **characterized in that** it also includes at least one means of rigid fastening in the form of a bodywork part(s) hook (9) comprising a foot (11) extending from the body (7) of the said dressing room (3) and a locking finger (13) defining with the said body (7) a spacer, the foot (11) of the hook (9) including a means of elastic embossing (17) intended to cooperate with the bodywork element (1), preferably a clip.

2. Coating part (3) according to Claim 1 **characterized in that** the elastic means of embossing (17) is perpendicular to the locking finger (13).

3. Coating part (3) according to one of the claims 1 or 2 **characterized in that** the means of elastic embossing (17) came from material with the foot (11) of the hook (9).

4. Coating part (3) according to one of the claims 1 to 3 **characterized in that** the foot (11) includes at least one rib (19) of reinforcement and positioning, preferably the said ribs (19) extend perpendicular to the locking finger (13).

5. Coating part (3) in accordance with one of the claims 1 to 4 characterized that at least one hook (9) is placed in the lower part of the body (7) of the said dressing part (3).

6. Vehicle consisting of at least one bodywork element (1) on which a dressing piece (3) is attached in accordance with one of the claims 1 to 5, **characterized in that** the bodywork element or at least one of the said bodywork elements (1) includes at least one day (15) for the purpose of receiving a hook (9) carried by the said dressing piece (3), with the said day (15) dimensioned given to have a length not less than the length of the said hook (9).

7. Vehicle according to claim 6, the hook (9) having at its foot (11) at least one rib (19) extending perpendicular to the locking finger (13) and defining the width of the hook (9), the vehicle is **characterized in that** the day (15) has a trapezoidal shape dimensioned so that the widest base (21) of the hook trapeze is larger than the width presented by the hook (9).

8. Assembly of a dressing room (3) in accordance with one of the claims 1 to 5 on at least one bodywork part of a vehicle in accordance with one of the claims 6 or 7 **characterized in that** it includes the following steps:
a. insertion of the hook(s) (9) presented by the dressing part (3) in the corresponding days (15) of the bodywork element(s) (1) in a direction of penetration that is substantially perpendicular to the surface of the bodywork element(s) (1); and
b. translation of the said dressing room (3) along the said bodywork element(s) (1) so that the edges of the day(s) (15) enter the spacer of the hook(s) (9).

9. Method of mounting according to Claim 8 characterized as the translation of the said dressing room (3) along the said body element(s) (1) in step (b) is carried out vertically and/or includes in addition a stage (c) of fastening the dressing room (3) on the said body element(s) (1) by inserting elastic fasteners distributed over the body of the said dressing room (3) in days placed in stares on the body element(s) (1).
